# FASCICULE DE BREVET EUROPEEN

(11) **EP 0 519 801 B1**
(45) Date de publication et mention de la délivrance du brevet: **04.12.1996**
(21) Numéro de dépôt: 92401662.9
(22) Date de dépôt: 16.06.1992
(51) Int. Cl.: B01D 29/41, B01D 29/54, B01D 29/58, B01D 29/68

(54) **Filtre à fluide comportant deux ensembles de filtration**
Fluid-Filter mit zwei Filtervorrichtungen
Fluid filter comprising two filtration assemblies

(30) Priorité: 20.06.1991 FR 9107599
(43) Date de publication de la demande: 23.12.1992
(73) Titulaire: MOATTI FILTRATION SA, F-78210 Saint Cyr l'Ecole (FR)
(72) Inventeur: Christophe, Théophile Jean, F-78330 Fontenay le Fleury (FR); Moatti, Jean-Claude Prosper, F-92150 Suresnes (FR)
(74) Mandataire: Dronne, Guy

(56) Documents cités:
- EP-A- 0 149 931
- EP-A- 0 382 202
- DE-A- 2 631 597
- DE-A- 2 757 447

## Description

On connait déjà un filtre à fluide comportant un corps de filtre muni d'un raccord principal d'admission d'un fluide à filtrer et, contenus à l'intérieur dudit corps de filtre : une enceinte d'admission du fluide à filtrer dans laquelle débouche ledit raccord d'admission ; un premier ensemble de filtration comprenant des éléments filtrants et une première enceinte de réception du fluide filtré, séparée du reste du filtre par lesdits éléments filtrants dudit premier ensemble de filtration ; un deuxième ensemble de filtration comprenant des éléments filtrants et une deuxième enceinte de réception du fluide filtré, séparée du reste du filtre par lesdits éléments filtrants dudit deuxième ensemble de filtration ; et un dispositif de nettoyage périodique des éléments filtrants de chacun desdits premier et deuxième ensembles de filtration comportant au moins une enceinte de réception des résidus du nettoyage desdits éléments filtrants.

FR-A-2 554 735 représente un tel filtre à fluide, dans lequel le deuxième ensemble de filtration a pour fonction de recevoir le fluide chargé d'impuretés provenant du nettoyage (ou décolmatage) périodique des éléments filtrants du premier ensemble de filtration et d'en assurer la filtration. Le fluide filtré issu de la filtration réalisée par ce deuxième ensemble de filtration a, dans le filtre connu, sensiblement la même qualité de filtration que celui issu de la filtration principale réalisée par le premier ensemble de filtration, et est réintroduit dans le circuit du fluide épuré. Avec un seul filtre, l'utilisateur peut ainsi, d'une part traiter le débit principal à filtrer, d'autre part, également, traiter le débit secondaire issu du nettoyage périodique ou décolmatage des éléments filtrants du premier ensemble de filtration.

EP-A-0 149931 illustre également un filtre à fluide dans lequel le deuxième ensemble de filtration a pour fonction de recevoir et de filtrer le fluide chargé d'impuretés provenant du nettoyage périodique des éléments filtrants du premier ensemble de filtration. Ce filtre connu permet simultanément de traiter le débit principal à filtrer, de traiter le débit secondaire issu du nettoyage des éléments filtrants du premier ensemble de filtration et il permet également de décolmater périodiquement les éléments filtrants du deuxième ensemble de filtration.

EP-A-0 250 861 concerne un filtre à fluide comportant deux ensembles de filtration montés en parallèle qui possèdent des calibrages de filtration différents. Le fluide emprunte deux circuits totalement séparés qui aboutissent à deux orifices de sortie où le fluide épuré a des qualités d'épuration différentes. Cependant aucun nettoyage du filtre n'est prévu en cours d'utilisation, seul le démontage complet du filtre permet le décolmatage des deux ensembles de filtration.

Les exigences en matière de filtration ont évoluées, et il est admis aujourd'hui d'avoir recours, dans certaines utilisations, à deux filtres distincts pour réaliser les deux filtrations précitées. Par contre, il est des utilisations où il serait précieux, afin de pouvoir alimenter en fluide épuré une même machine, de pouvoir disposer d'un fluide présentant deux qualités d'épurations, ceci si possible au moyen d'un même filtre. C'est ainsi que certains moteurs à combustion interne, du type "Diesel", munis d'un turbo-compresseur de suralimentation, ont des circuits de lubrification doubles, pour la lubrification d'une part du moteur lui-même, d'autre part de son turbo-compresseur. Les qualités de filtration sont différentes, le moteur admettant un tamisage de 35 microns, alors que le turbo-compresseur exige un tamisage au plus égal à 20 microns, par exemple.

En adaptant les filtres connus, il devient possible, avec un seul filtre, d'obtenir les débits désirés de fluide filtré, avec les qualités de filtration désirées.

L'invention a pour objet cette adaptation et est donc relative à un filtre dans lequel : a) l'enceinte de réception du dispositif de nettoyage périodique est séparée de chacune desdites première et deuxième enceintes de réception du fluide filtré et est reliée à un raccord d'évacuation des résidus du nettoyage ; et b) les éléments filtrants des premier et deuxième ensembles de filtration ont des calibrages de filtration notablement différents.

L'invention a en outre pour but de maintenir de bonnes qualités de filtration et éviter toutes dégradations en service des caractéristiques initiales de filtration d'un filtre permettant l'obtention simultanée de deux qualités du fluide filtré.

Les avantageuses dispositions suivantes sont en outre de préférence adoptées :
- lesdits calibrages de filtration sont dans un rapport de 1 à au moins 1,4 ;
- le premier ensemble de filtration comporte un premier raccord d'admission du fluide à filtrer, qui communique directement avec l'enceinte d'admission du fluide à filtrer, cependant que le deuxième ensemble de filtration comporte un deuxième raccord d'admission du fluide à filtrer, qui communique avec la première enceinte de réception du fluide filtré,
- les premier et deuxième ensembles de filtration comportent, respectivement, des premier et deuxième raccords d'admission du fluide à filtrer, qui communiquent chacun directement avec l'enceinte d'admission du fluide à filtrer.

L'avantage principal de l'invention réside dans le fait qu'avec un seul filtre, l'utilisateur ce la machine a la possibilité d'obtenir un même fluide filtré selon deux qualités différentes, souvant en un premier débit d'une qualité déterminée de filtration, et en un deuxième débit très inférieur au premier débit (5 à 10 % du premier débit), mais d'une qualité sensiblement supérieure à ladite qualité déterminée.

L'invention sera mieux comprise et des caractéristiques secondaires et leurs avantages apparaîtront au cours de la description de réalisations donnée ci-dessous à titre d'exemple.

Il est entendu que la description et les dessins ne sont donnés qu'à titre indicatif et non limitatif.

Il sera fait référence aux dessins annexés, dans lesquels:
- la figure 1 est une coupe axiale d'une première variante de réalisation d'un filtre conforme à l'invention ; et,
- la figure 2 est une coupe axiale d'une deuxième variante de réalisation d'un filtre conforme à l'invention.

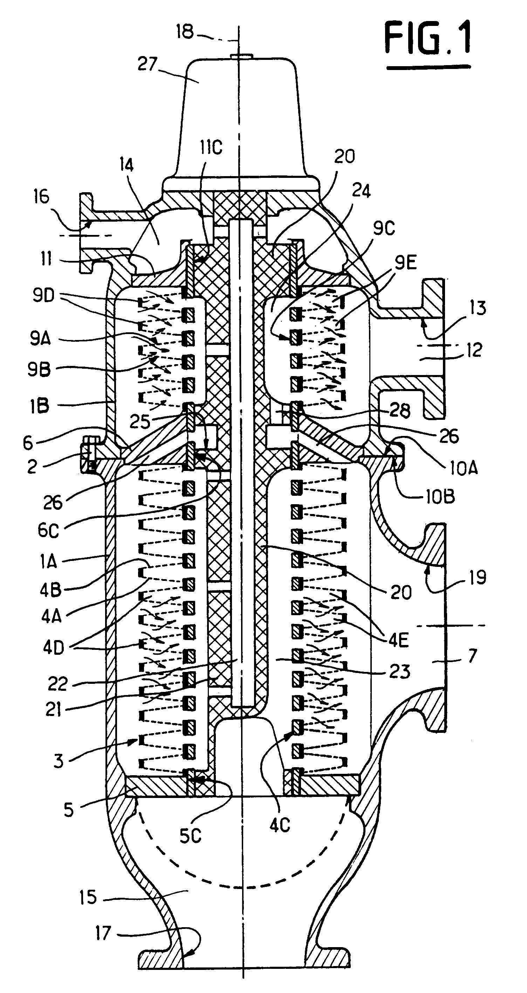

Le filtre de la figure 1 comprend :
- un corps de filtre en deux parties 1A, 1B assemblées par des vis 2 et formant un carter de filtre ;
- un premier ensemble de filtration 3, constitué par un empilage de galettes de filtration présentant chacune deux tamis 4A, 4B, ledit empilage s'étendant entre une plaque transversale 5, qui en constitue l'extrémité inférieure et est ajustée avec étanchéité à la face interne de la partie 1A du corps de filtre, et un support transversal 6, qui en constitue l'extrémité supérieure et est ajusté avec étanchéité aussi bien à la face interne de la partie 1A, qu'à celle 1B du corps de filtre, dans la zone des faces d'assemblage 10A, 10B desdites parties ;
- une première enceinte 7 de réception du fluide filtré par les galettes 4A-4B, séparée du reste du filtre par lesdits tamis 4A,4B, et, par la plaque transversale 5 et le support transversal 6, et reliée à l'environnement extérieur du filtre par un raccord 19 ;
- un deuxième ensemble de filtration 8, constitué par un empilage de galettes de filtration présentant chacune deux tamis 9A, 9B, ledit empilage s'étendant entre le support transversal 6, qui en constitue l'extrémité inférieure et une plaque transversale 11, qui en constitue l'extrémité supérieure et est ajustée avec étanchéité avec la partie 1B du corps de filtre ;
- une deuxième enceinte 12 de réception du fluide filtré par les galettes 9A-9B, séparée du reste du filtre par lesdits tamis 9A, 9B, et, par le support 6 et la plaque 11, et reliée à l'environnement extérieur du filtre par un raccord 13 ;
- une enceinte 14 de réception du fluide contenant les impuretés décollées des tamis 4A, 4B, 9A, 9B lors d'opérations automatiques et périodiques de nettoyage et de décolmatage desdits tamis, ladite enceinte 14 étant située à la partie supérieure du filtre, du côté de la plaque transversale 11 opposé à la deuxième enceinte 12 de réception du fluide filtré ;
- une enceinte 15 d'admission du fluide à filtrer, située à la partie inférieure du filtre, du côté de la plaque transversale 5 opposé à la première enceinte 7 de réception du fluide filtré ;
- un raccord 16 d'évacuation du fluide contenu dans l'enceinte 14, chargé des impuretés provenant du nettoyage et du décolmatage des tamis ;
- un raccord principal 17 d'admission du fluide à filtrer dans l'enceinte d'admission 15.

Chaque galette discoïde 4A-4B, et, 9A-9B comporte un alésage central 4C, 9C, respectivement, les divers alésages 4C et 9C étant cylindriques, coaxiaux d'axe 18, de même que les plaques transversales 5, 11 et le support 6 comportent des alésages cylindriques 5C, 11C et 6C, respectivement, également coaxiaux d'axe 18.

De plus, comme cela est déjà connu, par exemple par le document déjà cité, chaque galette est sectorisée. Un distributeur 20, monté rotatif autour de l'axe 18, est ajusté avec étanchéité aux alésages 5C, 6C, 11C, et comporte un secteur angulaire 21 dont les extrémités sont adaptées avec étanchéité aux alésages 4C et 9C des galettes de filtration et sont susceptibles d'isoler successivement chaque secteur angulaire desdites galettes des autres secteurs au cours de la rotation dudit distributeur 20.

Ce distributeur 20 comporte un conduit interne 22 avec lequel communiquent l'espace interne 40, 9D, du secteur de chaque galette 4A-4B, 9A-9B, respectivement, isolé par le distributeur, et, comporte un premier conduit 23, qui constitue un premier raccord d'admission du fluide à filtrer, communiquant, d'une part avec l'enceinte 15 d'admission du fluide à filtrer, d'autre part avec les espaces internes 4E, des secteurs de chaque galette 4A-4B, autres que les secteurs 4D. Le distributeur 20 comporte également un deuxième conduit 24, qui constitue un deuxième raccord d'admission du fluide à filtrer, communiquant, d'une part, avec une gorge 25 ménagée dans le distributeur 20, par l'intermédiaire d'un conduit de liaison 28 ménagé également dans le distributeur 20, d'autre part, avec les espaces internes 9E des secteurs de chaque galette 9A-9B, autres que les secteurs 9D.

Le conduit interne 22 du distributeur débouche dans l'enceinte 14 de réception du fluide contenant les impuretés provenant du nettoyage et du décolmatage des tamis ; la gorge 25 communique avec la première enceinte 7 de réception du fluide filtré par l'intermédiaire de conduits 26 ménagés dans le support 6.

Enfin, un moteur 27, d'entraînement en rotation du distributeur 20, est fixé sur la partie supérieure de la partie 1B du corps du filtre ; est constitué, de préférence, par un moteur hydraulique alimenté par l'un des fluides contenus dans le filtre, comme cela est connu par ailleurs ; et a son arbre moteur attelé audit distributeur 20.

Il doit être précisé que les nombres de galettes 4A-4B, 9A-9B des deux ensembles de filtration ainsi que les dimensions des mailles des tamis sont choisis en fonction des débits désirés et des qualités désirées des fluides filtrés disponibles aux raccords 13 et 19. Cependant, conformément à l'invention, le choix des qualités est réalisé de manière que le rapport des calibrages des mailles d'une part dans tamis 4A, 4B, d'autre part des tamis 9A, 9B, soit au moins égal à 1,4 ; ceci afin d'atteindre le but que vise l'invention. Ceci correspond, par exemple, à un fluide filtré, disponible au raccord d'évacuation 19, ne comportant pas d'impuretés ayant des dimensions supérieures à 35 microns, tel que le fluide de lubrification d'un moteur type "Diesel", et à un fluide filtré, disponible au raccord d'évacuation 13, ne comportant pas d'impuretés ayant des dimensions supérieures à 25 microns, tel que le fluide de lubrification des paliers du turbo-compresseur équipant ledit moteur type "Diesel". Dans cet exemple, les débits sont également très différents : 200 m3/heure pour le fluide de lubrification d'un moteur type "Diesel" d'une puissance déterminée, et 6 à 10 m3/heure pour le fluide de lubrification du turbo-compresseur correspondant.

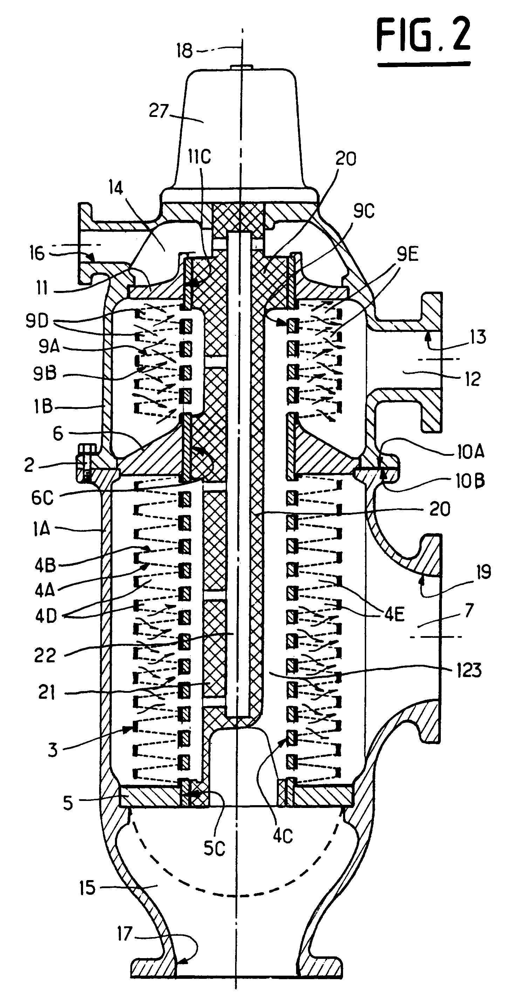

Le filtre représenté sur la figure 2 comporte toutes les caractéristiques du filtre de la figure 1, à l'exception des points suivants :
- le distributeur 20 de la variante de la figure 2 ne comporte pas de gorge 25, ni de conduit de liaison 28, et le support 6 ne comporte pas non plus de conduits 26 ;
- les premier conduit 23 et deuxième conduit 24 de la figure 1 sont remplacés par un conduit unique 123 de la figure 2 qui communique directement avec l'enceinte d'admission 15 du fluide à filtrer, et, avec les espaces internes 4E et 9E des secteurs des galettes 4A-4B et 9A-9B, autres que les secteurs 4D et 9D.

Les choix des calibrages des mailles des tamis 4A, 4B, et, 9A, 9B sont les mêmes que ceux de la réalisation de la figure 1.

Le fonctionnement du filtre de la figure 1 va maintenant être exposé.

Le fluide à filtrer pénètre dans l'enceinte d'admission 15, et, par l'intermédiaire du conduit 23, dans les espaces 4E, traverse les tamis 4A, 4B délimitant ces espaces 4E en se débarassant de ses impuretés et est reçu dans la première enceinte 7. La plus grande partie du fluide épuré contenu dans la première enceinte 7 s'échappe par le raccord 19 vers un premier circuit d'utilisation. Une deuxième partie de ce fluide contenu dans la première enceinte 7 pénètre dans les espaces 4D en traversant à contre courant les tamis 4A-4B délimitant ces espaces 4D, nettoyant et décolmatant ainsi lesdits tamis, pour finalement s'échapper par le conduit 22 vers l'enceinte 14 et le raccord 16 d'évacuation de cette partie du fluide chargé d'impuretés de décolmatage. Une troisième partie du fluide contenu dans la première enceinte 7 est dirigée vers le conduit 24 par l'intermédiaire des conduits 26 et 28 et de la gorge 25.

Ce fluide déjà épuré, véhiculé de la première enceinte 7 vers le conduit 24, pénètre dans les espaces 9E, traverse les tamis 9A, 9B délimitant ces espaces 9E en se débarassant de certaines des impuretés qu'il contenait encore et est reçu dans la deuxième enceinte 12. La plus grande partie de ce fluide est dirigée, à travers le raccord 13, vers un deuxième circuit d'utilisation. L'autre partie du fluide contenu dans la deuxième enceinte 12, environ 5 % de ce fluide, traverse à contre courant les tamis 9A, 9B délimitant les espaces 9D, nettoie et décolmate ces tamis, et s'échappe par le conduit 22 vers l'enceinte 14 et le raccord 16 d'évacuation de cette partie de fluide chargée des impuretés de décolmatage.

Finalement, avec un seul filtre, l'utilisateur obtient deux débits de fluides épurés, disponibles aux raccords 19 et 13, ayant deux qualités différentes de filtration. Avec le filtre de la figure 1, les grosses impuretés sont toutes arrêtées par les tamis 4A, 4B du premier ensemble de filtration, les tamis 9A, 9B du deuxième ensemble de filtration n'ayant donc pour fonction que celle d'arrêter les autres impuretés non encore arrêtées par les tamis 4A, 4B. Les tamis 9A, 9B travaillent dans de bonnes conditions ce qui facilite l'obtention d'une filtration satisfaisante.

Avec le filtre de la figure 2, le fonctionnement est identique, sauf que les tamis 9A, 9B doivent filtrer toutes les impuretés, et pas seulement celles qui ont traversé les tamis 4A, 4B. L'homme du métier sait cependant effectuer le choix du nombre des galettes 9A-9B pour obtenir la même qualité de filtration du fluide contenu dans la deuxième enceinte 12 que celle obtenue avec le filtre de la figure 1.

Uniquement à titre de rappel d'un fonctionnement connu, le distributeur 20, entraîné en rotation par le moteur 27, isole successivement chaque secteur angulaire des galettes 4A-4B, et, 9A-9B, au moyen de son propre secteur angulaire 21, ce qui permet le nettoyage et le décolmatage automatiques et périodiques des tamis.

Il y a encore lieu d'observer que :
- l'invention concerne un filtre permettant l'obtention de deux qualités de fluides filtrés, quelque soit la constitution des éléments de filtration ;
- en particulier, l'application de l'invention n'est pas limitée aux filtres comportant des galettes discoïdes de filtration, et couvre également les filtres comportant par exemple des tamis cylindriques, généralement coaxiaux à l'axe 18 ;
- afin de maintenir de bonnes qualités de filtration et éviter toutes dégradations en service des caractéristiques initiales de filtration, il est nécessaire de prévoir un dispositif de nettoyage périodique et automatique des éléments filtrants des deux ensembles de filtration ;
- là encore, l'invention n'est pas limitée aux filtres comportant un distributeur rotatif 20 : certains filtres ont des dispositifs de nettoyage et de décolmatage montés à translation parallèlement à l'axe 18 ; l'invention s'applique également à ce type de filtres.

Au reste, l'invention n'est pas limitée aux réalisations décrites, mais en couvre au contraire toutes les variantes qui pourraient leur être apportées sans sortir de leur cadre tel que défini par les revendications ci-après.

## Revendications

1. Filtre à fluide comportant un corps de filtre (1A-1B) muni d'un raccord principal d'admission d'un fluide à filtrer et, contenus à l'intérieur dudit corps de filtre:
- une enceinte (15) d'admission du fluide à filtrer dans laquelle débouche ledit raccord d'admission (17);
- un premier ensemble de filtration (4A-4B) comprenant des éléments filtrants (4A, 4B) et une première enceinte (7) de réception du fluide filtré, séparée du reste du filtre par lesdits éléments filtrants (4A,4B) dudit premier ensemble de filtration;
- un deuxième ensemble de filtration (9A-9B) comprenant des éléments filtrants (9A,9B) et une deuxième enceinte (12) de réception du fluide filtré, séparée du reste du filtre par lesdits éléments filtrants (9A,9B) dudit deuxième ensemble de filtration; les éléments filtrants (4A,4B,9A,9B) des premier et deuxième ensembles de filtration ayant des calibrages de filtration notamment différents;
caractérisé en ce qu'il comprend aussi un dispositif (20-21-27) de nettoyage périodique des éléments filtrants de chacun desdits premier et deuxième ensembles de filtration qui comporte au moins une enceinte (22-14) de réception des résidus du nettoyage desdits ensembles filtrants; ladite enceinte de réception (22-14) du dispositif de nettoyage périodique étant séparée de chacune desdites première (7) et deuxième (12) enceintes de réception du fluide filtré et reliée à un raccord (16) d'évacuation des résidus du nettoyage.

2. Filtre à fluide selon la revendication 1, caractérisé en ce que lesdits calibrages de filtration sont dans un rapport de 1 à au moins 1,4.

3. Filtre à fluide selon la revendications 1, caractérisé en ce que le premier ensemble de filtration (4A-4B) comporte un premier raccord (23) d'admission du fluide à filtrer, qui communique directement avec l'enceinte (15) d'admission du fluide à filtrer, cependant que le deuxième ensemble de filtration (9A-9B) comporte un deuxième raccord (24) d'admission du fluide à filtrer, qui communique (28-25-26) avec la première enceinte (7) de réception du fluide filtré.

4. Filtre à fluide selon la revendications 2, caractérisé en ce que le premier ensemble de filtration (4A-4B) comporte un premier raccord (23) d'admission du fluide à filtrer, qui communique directement avec l'enceinte (15) d'admission du fluide à filtrer, cependant que le deuxième ensemble de filtration (9A-9B) comporte un deuxième raccord (24) d'admission du fluide à filtrer, qui communique (28-25-26) avec la première enceinte (7) de réception du fluide filtré.

5. Filtre à fluide selon la revendication 1, caractérisé en ce que les premier (4A-4B) et deuxième (9A-9B) ensembles de filtration comportent, respectivement, des premier (123) et deuxième (123) raccords d'admission du fluide à filtrer, qui communiquent chacun directement avec l'enceinte (15) d'admission du fluide à filtrer.

6. Filtre à fluide selon la revendication 2, caractérisé en ce que les premier (4A-4B) et deuxième (9A-9B) ensembles de filtration comportent, respectivement, des premier (123) et deuxième (123) raccords d'admission du fluide à filtrer, qui communiquent chacun directement avec l'enceinte (15) d'admission du fluide à filtrer.

## Claims

1. Fluid filter comprising a filter body (1A-1B) provided with a principal connection for admission of a fluid to be filtered and, contained inside said filter body:
- an enclosure (15) for admission of the fluid to be filtered into which said admission connection (17) opens out;
- a first filtration assembly (4A-4B) comprising filtering elements (4A, 4B) and a first enclosure (7) for receiving the filtered fluid, separated from the rest of the filter by said filtering elements (4A, 4B) of said first filtration assembly;
- a second filtration assembly (9A-9B) comprising filtering elements (9A, 9B) and a second enclosure (12) for receiving the filtered fluid, separated from the rest of the filter by said filtering elements (9A, 9B) of said second filtration assembly; the filtering elements (4A, 4B, 9A, 9B) of the first and second filtration assemblies presenting notably different filtration calibrations;
characterized in that it also comprises a device (20-21-27) for periodically cleaning the filtering elements of each of said first and second filtration assemblies comprising at least one enclosure (22-14) for receiving the residues of cleaning from said filtering elements; said receiving enclosure (22-14) of the periodic cleaning device being separated from each of said first (7) and second (12) enclosures for receiving the filtered fluid and being connected to a connection (16) for evacuating the residues of cleaning.

2. Fluid filter according to claim 1, characterized in that said filtration calibrations are in a ratio of 1 to at least 1.4.

3. Fluid filter according to claim 1, characterized in that the first filtration assembly (4A-4B) comprises a first connection (23) for admission of the fluid to be filtered, which communicates directly with the enclosure (15) for admission of the fluid to be filtered, whilst the second filtration assembly (9A-9B) comprises a second connection (24) for admission of the fluid to be filtered, which communicates (28-25-26) with the first enclosure (7) for receiving the filtered fluid.

4. Fluid filter according to claim 2, characterized in that the first filtration assembly (4A-4B) comprises a first connection (23) for admission of the fluid to be filtered, which communicates directly with the enclosure (15) for admission of the fluid to be filtered, whilst the second filtration assembly (9A-9B) comprises a second connection (24) for admission of the fluid to be filtered, which communicates (28-25-26) with the first enclosure (7) for receiving the filtered fluid.

5. Fluid filter according to claim 1, characterized in that the first (4A-4B) and second (9A-9B) filtration assemblies respectively comprise first (123) and second (123) connections for admission of the fluid to be filtered, which each communicate directly with the enclosure (15) for admission of the fluid to be filtered.

6. Fluid filter according to claim 2, characterized in that the first (4A-4B) and second (9A-9B) filtration assemblies respectively comprise first (123) and second (123) connections for admission of the fluid to be filtered, which each communicate directly with the enclosure (15) for admission of the fluid to be filtered.

## Patentansprüche

1. Fluidfilter mit einem Filterkörper (1A - 1B), der einen im Inneren des Filterkörpers vorgesehenen Hauptzufluß zum Zuführen eines zu filternden Fluids aufweist, enthaltend:
- eine Einfassung (15) zum Zuführen des zu filternden Fluids, in die die Zuführverbindung (17) einmündet;
- einen ersten Filteraufbau (4A - 4B) mit Filterelementen (4A, 4B) und einer ersten Aufnahmeeinfassung für zu filterndes Fluid, die von dem Rest des Filters durch die Filterelemente (4A, 4B) des ersten Filteraufbaus getrennt ist;
- einen zweiten Filteraufbau (9A - 9B) mit Filterelementen (9A, 9B), und einer zweiten Aufnahmeeinfassung (12) für zu filterndes Fluid, die von dem Rest des Filters durch die Filterelemente (9A, 9B) des zweiten Filteraufbaus getrennt sind; wobei die Filterelemente (4A, 4B, 9A, 9B) des ersten und zweiten Filteraufbaus eine besonders unterschiedliche Filterkalibrierung aufweisen;
dadurch **gekennzeichnet,** daß er auch eine regelmäßig mit den Filterelementen bei sowohl dem ersten als auch dem zweiten Filteraufbau vorgesehene Reinigungsvorrichtung (20-21-27) enthält, die zumindest eine Aufnahmeeinfassung (22 - 14) für die Reinigungsrückstände der Filterelemente aufweist; und daß die Aufnahmeeinfassung (22 - 14) der regelmäßig vorgesehenen Reinigungsvorrichtung jeweils von der ersten Aufnahmeeinfassung (7) und der zweiten Aufnahmeeinfassung (12) für das zu filternde Fluid getrennt und mit einer Ablaufverbindung (16) für die Reinigungsrückstände verbunden ist.

2. Fluidfilter nach Anspruch 1, dadurch gekennzeichnet, daß die Filterkalibrierungen in einem Verhältnis von 1 bis zumindest 1,4 stehen.

3. Fluidfilter nach Anspruch 1, dadurch gekennzeichnet, daß der erste Filteraufbau (4A - 4B) eine erste Zulaufverbindung (23) für zu filterndes Fluid aufweist, die direkt mit der Zuführeinfassung (15) für das zu filternde Fluid kommuniziert, und daß der zweite Filteraufbau (9A - 9B) eine zweite Zuführverbindung (24) für zu filterndes Fluid aufweist, die mit der ersten Aufnahmeeinfassung (7) für zu filterndes Fluid kommuniziert (28 - 25 - 26).

4. Fluidfilter nach Anspruch 2, dadurch gekennzeichnet, daß der erste Filteraufbau (4A - 4B) eine erste Zuführverbindung (23) für zu filterndes Fluid enthält, die direkt mit der Zuführeinfassung (15) für zu filterndes Fluid kommuniziert, und daß der zweite Filteraufbau (9A - 9B) eine zweite Zuführverbindung (24) für zu filterndes Fluid aufweist, die mit der ersten Aufnahmeeinfassung (7) für das zu filternde Fluid kommuniziert (28 - 25 - 26).

5. Fluidfilter nach Anspruch 1, dadurch gekennzeichnet, daß der erste Filteraufbau (4A - 4B) und der zweite Filteraufbau (9A - 9B) jeweils erste (123) und zweite (123) Zuführverbindungen für zu filterndes Fluid enthalten, die jeweils direkt mit der Zuführeinfassung (15) für zu filterndes Fluid kommunizieren.

6. Fluidfilter nach Anspruch 2, dadurch gekennzeichnet, daß der erste (4A - 4B) und der zweite (9A - 9B) Filteraufbau jeweils erste (123) und zweite (123) Zuführverbindungen für zu filterndes Fluid aufweisen, die jeweils direkt mit der Zuführeinfassung (15) für zu filterndes Fluid kommunizieren.
